Europäisches Patentamt

European Patent Office

Office européen des brevets

(11) Publication number: **0 101 211**
**A1**

## (12) EUROPEAN PATENT APPLICATION

(21) Application number: 83304247.6

(22) Date of filing: 21.07.83

(51) Int. Cl.³: **G 06 F 3/023**

(30) Priority: 22.07.82 JP 128142/82

(43) Date of publication of application:
22.02.84 Bulletin 84/8

(84) Designated Contracting States:
DE FR GB

(71) Applicant: FANUC LTD
5-1, Asahigaoka 3-chome Hino-shi
Tokyo 191(JP)

(72) Inventor: Kishi, Hajimu
Hinohirayamadai-Jutaku 1104 6-7-8, Asahigaoka
Hino-shi Tokyo(JP)

(72) Inventor: Seki, Masaki
3-15-2-406, Takaidonishi
Suginami-ku Tokyo(JP)

(72) Inventor: Tanaka, Kunio
5-8-13, Tamagawa-cho
Akishima-shi Tokyo(JP)

(74) Representative: Billington, Lawrence Emlyn et al,
HASELTINE LAKE & CO Hazlitt House 28 Southampton
Buildings Chancery Lane
London WC2A 1AT(GB)

(54) Data input method and apparatus.

(57) Disclosed are a method and apparatus for entering data
using a picture displayed on the display screen (DFS) of a
cathode-ray tube. The display screen (DFS) is divided into an
m × n array of display areas (S2 to S9), each of which
displays a predetermined picture. A keyboard (TK) is pro-
vided with an m × n array of keys (1 to 9), each of which
corresponds to one of the display areas (S1 to S9) of the
display screen (DFS). Data conforming to a picture appearing
in any one of the display areas (S1 to S9) is entered by
pressing the key corresponding to said area.

Fig. 4

EP 0 101 211 A1

# DATA INPUT METHOD AND APPARATUS

This invention relates to a data input method and apparatus and, more particularly, to a method and apparatus for entering data employing pictures displayed on a screen.

Many numerical control (NC) units and NC automatic programming units come equipped with a display device such as a cathode-ray tube, or CRT. An NC unit having a CRT simplifies the operator's task by permitting such items as tool path, NC program data and various parameters to be displayed. The CRT provided on an NC automatic programming unit presents a display of tool path based on NC program data already created or in the process of being created, and a display of various items, such as a menu, necessary for creating the NC data. With such an NC automatic programming unit, necessary items of information are entered in successive fashion to create an NC program through a conversational mode of operation in which the operator selects desired items from the items displayed on the CRT.

In the conventional conversational input mode for selecting one of a number of items in a menu, the operator (a) calls a menu (for forming a hole in this case) to the display screen DFS of a CRT, as shown in Fig. 1, each item of the menu being represented by a number followed by characters identifying the item, and then enters the number of the desired item by using a keyboard or light pen, or (b) calls the menu to one edge of the display screen DFS, as shown in Figs. 2 and 3, the items of the menu being displayed in a row and identified by characters, and presses a prescribed one of plural selection keys K1, K2,..., K9 corresponding to the items in the menu, thereby entering data conforming to the selected item.

Both of the foregoing data input methods (a) and (b) have certain drawbacks. With method (a), the items in the menu appear in the form of alphabetic characters, making it difficult to distinguish one item from another at a single glance. Once the desired item is found, moreover, the operator must read the corresponding item number and then enter the number using the keyboard or light pen. This data entry procedure is troublesome and requires special means such as the light pen. Method (b) also does not permit desired items to be recognized quickly owing to the use of alphabetic characters. However, owing to the selection keys K1 through K9, each of which is provided adjacent a portion of the display corresponding to an item in the menu, entering the desired item is easy since the selection key corresponding thereto need only be pressed once the location of the item is found on the screen. The drawback is the higher cost entailed by providing these selection keys for the corresponding items displayed on the screen.

According to a first aspect of the invention there is provided a method of entering data using a picture displayed on a display screen, comprising the steps of:

displaying a predetermined picture in each of m x n display areas of the display screen obtained by dividing the display screen into an m x n array of the display areas;

establishing correspondence between said display areas and respective keys in a m x n array of keys provided on a keyboard; and

operating a prescribed key among said keys to enter an item of data conforming to a picture displayed in one of said display areas corresponding to said operated key.

According to a second aspect of the invention there is provided an apparatus for entering data using a picture displayed on a display screen, comprising:

a keyboard having input keys arranged in an m x n array;

a display screen operable to display a predetermined picture in each of m x n display areas of the display screen obtained by dividing the display screen into an m x n array of the display areas; and NP means for establishing correspondence between said display areas and respective keys in the m x n array of keys provided on the keyboard whereby, when the apparatus is in use, operating a prescribed key among said keys will enter an item of data conforming to a picture displayed in one of said display areas corresponding to the operated key.

According to a third aspect of the invention there is provided an apparatus for entering data using a picture displayed on cathode-ray tube having a display screen, comprising:

a keyboard having input keys;

keyboard control means responsive to an input signal from said keyboard for producing a signal indicative of an operated key;

a processing unit which receives the signal from said keyboard control means and which produces display data;

a display unit including the cathode-ray tube for displaying a predetermined picture in each of m x n display areas of the display screen obtained by partitioning the display screen into an m x n array of the display areas;

a picture memory for storing plural items of picture information for being displayed on the display screen of the cathode-ray tube; and

an input data memory for storing correspondence between data which enter said processing unit PPC and said display areas on the CRT screen in which said pictures are displayed.

Preferred examples of the present invention may provide a novel data input method and apparatus according to which an item, among a plurality of items on a screen, which is desired to be selected can be distinguished and selected at a glance by a simple operation, without any substantial rise in equipment cost.

Preferred examples of the invention may provide a method and apparatus for entering data using a picture displayed on the display screen of a cathode-ray tube. The display screen is divided into an m x n array of display areas, each of which displays a predetermined picture. A keyboard is provided with an m x n array of keys, each of which corresponds to one of the display areas of the display screen. Data conforming to a picture appearing in any one of the display areas is entered by pressing the key corresponding

0101211

to said area.

Features and advantages of an embodiment of the present invention will be apparent from the following description taken in conjunction with the accompanying drawings, in which:

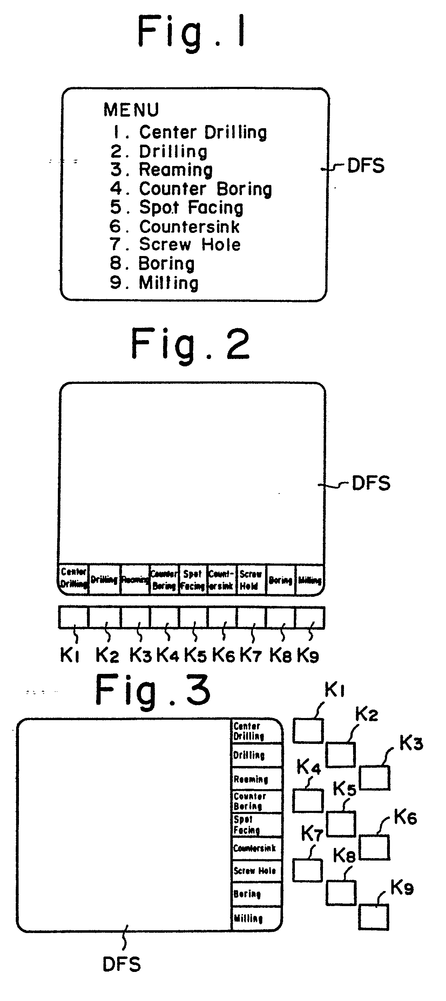

Figure 1, 2 and 3 are views of a display screen useful in describing a data input method according to the prior art;

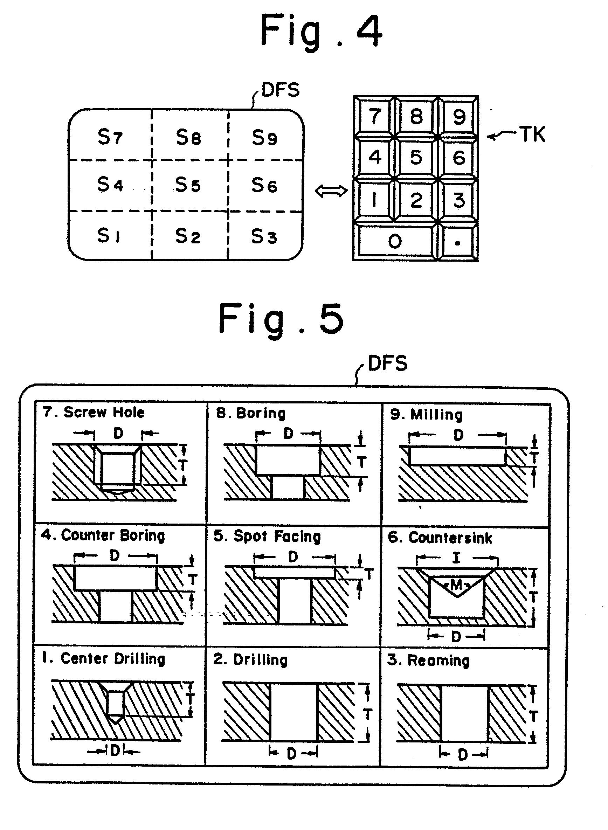

Figure 4 is a view useful in describing correspondence between a ten-key arrangement and subdivisions of a CRT display screen;

Fig. 5 is an example of a display on a CRT display screen, in which the display screen is divided into nine (3 x 3) subdivisions, with a different hole forming operation and the identification thereof being displayed in each subdivision; and

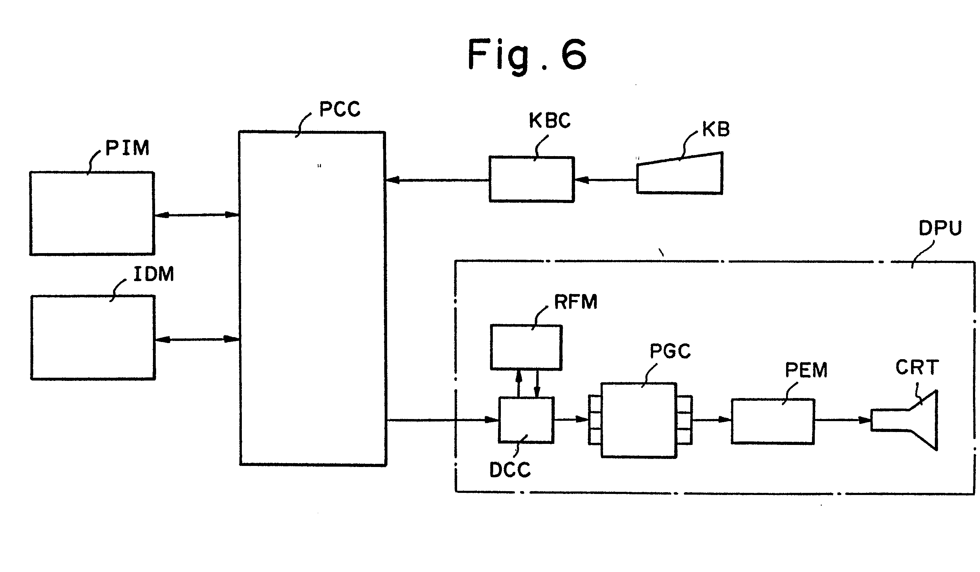

Fig. 6 is a block diagram illustrating a data input apparatus according to the present invention.

Referring to Fig. 4, there is shown the display screen DFS of a cathode-ray tube partitioned into a total of nine display areas S1 through S9 arranged in three rows and three columns. Each display area Si (i=1,2,... 9) has a corresponding key of numerical value "i" provided in a ten-key input keyboard arrangement TK. An item capable of being selected by the operator is displayed in each one of the areas S1 through S9. Data conforming to a desired item appearing in an area Si is entered by pressing the key "i".

Fig. 5 shows an example of a display in which nine hole forming operations, each of which is capable of being selected by the operator, appear in respective ones of the display areas S1 through S9 on the display screen DFS arranged as shown in Fig. 4. A noteworthy feature of the display is that a picture graphic indicates the shape of the hole that appears in each display area, and that the graphic, accompanied by the identification of the type of hole, occupies the entire display area.  This makes it possible to find the desired item at a single glance.

Fig. 6 is a block diagram of an apparatus for practicing the invention.  The apparatus comprises a keyboard KB having various keys, including the ten-key arrangement shown in Fig. 4, a keyboard control unit KBC receiving an input from the keyboard KB, a processing unit PCC comprising a computer incorporating a processor, a control program memory (ROM) and a data memory (RAM) for executing NC data creation processing and display control processing, and a picture memory PIM storing plural items of picture information.  These include information for displaying the graphics, shown in Fig. 5, on the display screen of a CRT, information for displaying whichever of various tools is to be used, and information for displaying the type of machining, such as "center boring", "center drilling", "end face rough cutting", "outer contour rough cutting", "inner contour rough cutting", "end face fine cutting", "outer contour fine cutting", "grooving" and "thread cutting", together with the pictures illustrating these processes.  The arrangement is such that the type of hole forming operation, type of tool used or type of machining is displayed on the CRT display screen by using the prescribed picture information, with the desired data being entered from the ten-key arrangement using a conversational mode of operation.  The apparatus further includes an input

-8-

data memory IDM for storing correspondence between data which enter the processing unit PCC and the display areas on the CRT screen, in which, say, the types of hole forming operation illustrated in Fig. 5 appear, and a display unit DPU which receives an input from the processing unit PCC. The display unit DPU includes a display control circuit DCC which receives the input from the processing unit PCC, a memory RFM for storing display data received from the processing unit PCC via the display control circuit DCC, a picture generating circuit PGC for generating, e.g., graphics and characters on the basis of the display data read out of the memory RFM continuously via the display control circuit DCC, a single-screen memory PEM for storing a picture generated by the picture generator PGC, and a cathode ray tube CRT for displaying the picture.

In operation, the processing unit PCC executes processing to create an NC program in accordance with a control program stored in the internal ROM of the processing unit. When a mode is established for entering the type of a hole forming operation, the processing unit PCC reads one screen of display data out of the picture memory PIM and transfers the data to the memory RFM of the display unit DPU. Thereafter, the display control circuit DCC reads the display data out of the memory RFM in successive fashion and applies the data to the picture genertor PGC, which responds by generating the single-screen picture shown in Fig. 5 and storing the picture in the single-screen memory PEM. Then, using the picture information stored in the single-screen memory PEM, raster scanning is performed to display the graphics of the nine types of machining and their identifications, shown in Fig. 5.

When the foregoing appears on the screen of the CRT, the operator presses a key on the keyboard KB corresponding to the graphic of the desired machining operation. For example, if the operator wishes to select the "SPOT FACING" item as the machining operation, then he presses the "5" key on the ten-key arrangement. This causes a signal indicative of the "5" key to enter the processing unit PCC through the keyboard control unit KBC. The processing unit PCC responds by reading the data corresponding to the display region S5 out of the input data memory IDM (which item of data corresponds to the spot facing operation), and by executing the processing specified by this data.

In accordance with the embodiment of the present invention as described and illustrated hereinabove, the identifications of items in a menu are displayed on the screen of the CRT together with the corresponding graphics, with the menu and graphics taking up the whole screen so that the items appear in large size. This makes it easy to recognize the items clearly so that a desired item can be selected at a single glance. Furthermore, the display screen is partitioned into a 3 x 3 array of nine display areas in the illustrated embodiment, each of which is arranged to correspond to a single key in a group of keys having the same arrangement (3 x 3) as the display areas. Therefore, once a desired item has been located on the display screen, the proper key for selecting the item can be found immediately owing to the one-to-one correspondence between the keys and display areas. Since the ten-key arrangement is standard equipment for a data input system and can be used for entering data in the manner described above, special keys need not be provided. The apparatus of the present invention can therefore be constructed at lower cost.

In the illustrated embodiment, the display screen in partitioned into a 3 x 3 array of nine display areas. In general, however, the display screen is partitioned into an m x n array of display areas, and a key is provided for each display area, the group of keys having the same arrangement as these areas.

As many apparently widely different embodiments of the present invention can be made without departing from the spirit and scope thereof, it is to be understood that the invention is not limited to the specific embodiments thereof except as defined in the appended claims.

CLAIMS.

1. A method of entering data using a picture displayed on a display screen, comprising the steps of:

displaying a predetermined picture in each of m x n display areas of the display screen obtained by dividing the display screen into an m x n array of the display areas;

establishing correspondence between said display areas and respective keys in an m x n array of keys provided on a keyboard; and

operating a prescribed key among said keys to enter an item of data conforming to a picture displayed in one of said display areas corresponding to said operated key.

2. The method according to claim 1, wherein a graphic indicating a machining operation is displayed in each of said display areas.

3. An apparatus for entering data using a picture displayed on a display screen, comprising:

a keyboard having input keys arrayed in an m x n array;

a display screen operable to display a predetermined picture in each of m x n display areas of the display screen obtained by dividing the display screen into an m x n array of the display areas; and NP means for establishing correspondence between said display areas and respective keys in the m x n array of keys provided on the keyboard whereby, when the apparatus is in use, operating a prescribed key among said keys will enter an item of data conforming to a picture displayed in one of said display areas corresponding to the operated key.

4. The apparatus according to claim 3, and comprising:

keyboard control means responsive to an input signal from said keyboard for producing a signal indicative of an operated key; and

a processing unit for receiving said signal from said keyboard control means and for reading data relating to the display area corresponding to the operated key.

5. The apparatus according to claim 3 or 4, and comprising a picture memory for storing plural items of picture information for being displayed on the display screen.

6. The apparatus according to claim 4, or claims 4 and 5 combined, wherein said correspondence establishing means comprises an input data memory for storing correspondence between data which enter said processing unit from said keyboard control means, and said display areas on the CRT screen in which said pictures are displayed when the apparatus is in use.

7. The apparatus according to claim 4 or 6, or claim 5 when appended to claim 4, wherein said processing unit includes a numerical control processor, a control program memory and a data memory for use in executing numerical control data creating processing and display control processing.

8. The apparatus according to claim 4, 6 or 7, or claim 5 when appended to claim 4, wherein said display screen is part of a display unit comprising:

a display control circuit for receiving display data from said processing unit;

a memory for storing display data received from said processing unit via said display control circuit;

a picture generating circuit for generating a picture on the basis of display data read out of said memory continuously via said display control circuit, and a single-screen memory for storing the picture generated by said picture generating circuit.

9. The apparatus according to any of claims 3 to 8, wherein the display screen is the screen of a cathode-ray tube.

10. The apparatus according to any of claims 3 to 9, wherein the display screen is divided into a 3 x 3 array of display areas when the apparatus is in use.

11. An apparatus for entering data using a picture displayed on a cathode-ray tube having a display screen, comprising;

a keyboard having input keys;

keyboard control means responsive to an input signal from said keyboard for producing a signal indicative of an operated key;

a processing unit which receives the signal from said keyboard control means and which produces display data;

a display unit including the cathode-ray tube for displaying a predetermined picture in each of m x n display areas of the display screen obtained by partitioning the display screen into an m x n array of the display areas;

a picture memory for storing plural items of picture information for being displayed on the display screen of the cathode-ray tube; and

an input data memory for storing correspondence between data which enter said processing unit PCC and said display areas on the CRT screen in which said pictures are displayed.

12. Apparatus according to any of claims 3 to 11, which is adapted to display a graphic, indicating a machining operation, in each of said display areas.

# Fig. 1

MENU
1. Center Drilling
2. Drilling
3. Reaming
4. Counter Boring
5. Spot Facing
6. Countersink
7. Screw Hole
8. Boring
9. Milling

—DFS

# Fig. 2

—DFS

| Center Drilling | Drilling | Reaming | Counter Boring | Spot Facing | Countersink | Screw Hold | Boring | Milling |

K1 K2 K3 K4 K5 K6 K7 K8 K9

# Fig. 3

Center Drilling — K1
Drilling — K2
Reaming — K3
Counter Boring — K4
Spot Facing — K5
Countersink — K6
Screw Hole — K7
Boring — K8
Milling — K9

DFS

# Fig.4

DFS

| S7 | S8 | S9 |
| S4 | S5 | S6 |
| S1 | S2 | S3 |

← TK

| 7 | 8 | 9 |
| 4 | 5 | 6 |
| 1 | 2 | 3 |
| 0 | . | |

⟺

# Fig.5

DFS

| 7. Screw Hole | 8. Boring | 9. Milling |
| 4. Counter Boring | 5. Spot Facing | 6. Countersink |
| 1. Center Drilling | 2. Drilling | 3. Reaming |

# Fig. 6

0101211

## European Patent Office

# EUROPEAN SEARCH REPORT

Application number

EP 83 30 4247

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | EP-A-0 034 506 (FUJITSU FANUC LTD.) <br> * Abstract; page 7, lines 15-28; figures 2,7; claims 1,10; page 1, lines 4-8; page 22, lines 4-17 * | 1,3,4 | G 06 F 3/023 |
| Y | | 2,5-12 | |
| Y | EP-A-0 044 192 (FUJITSU FANUC LTD.) <br> * Abstract; page 29, line 23 - page 30, line 11; figures 26,35; claims 25,26 * | 2,5-12 | |
| A | PATENTS ABSTRACTS OF JAPAN, vol. 5, no. 196(P-93)(868), 12th December 1981 <br> & JP - A - 56 118 135 (MATSUSHITA DENKI SANGYO K.K.) 17-09-1981 * Whole abstract * | 1,3,11 | |
| A | US-A-4 291 198 (ANDERSON et al.) <br> * Abstract; figures 2,8; column 4, line 56 - column 5, line 9 * | 1,3,11 | |
| A | US-A-4 001 807 (RENZO DALLIMONTI) <br> * Figure 1; column 3, line 33 - column 4, line 41 * | 1,3,11 | |
| | --- -/- | | |

TECHNICAL FIELDS SEARCHED (Int. Cl. ³)

G 06 F
G 05 B

The present search report has been drawn up for all claims

| Place of search THE HAGUE | Date of completion of the search 27-10-1983 | Examiner BECKER K.H. |
|---|---|---|

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. 3) |
|---|---|---|---|
| A | US-A-4 333 097 (BURIC et al.)<br>* Abstract; figures 1,2; claim 1 * | 1,3,11 | |

TECHNICAL FIELDS SEARCHED (Int. Cl. 3)

The present search report has been drawn up for all claims

| Place of search<br>THE HAGUE | Date of completion of the search<br>27-10-1983 | Examiner<br>BECKER K.H. |
|---|---|---|